# EUROPÄISCHE PATENTSCHRIFT

(11) **EP 2 899 307 B1**
(45) Veröffentlichungstag und Bekanntmachung des Hinweises auf die Patenterteilung: **01.02.2017**
(21) Anmeldenummer: 15150802.5
(22) Anmeldetag: 12.01.2015
(51) Int. Cl.: D06F 37/00, F16C 33/76, F16J 15/32

(54) **Waschaggregat für eine Waschmaschine**
Washing unit for a washing machine
Lessive pour un lave-linge

(30) Priorität: 28.01.2014 DE 102014100939
(43) Veröffentlichungstag der Anmeldung: 29.07.2015
(73) Patentinhaber: Miele & Cie. KG, 33332 Gütersloh (DE)
(72) Erfinder: Fechtel, Benedikt, 33378 Rheda-Wiedenbrück (DE); Eckert, Norbert, 33102 Paderborn (DE)

(56) Entgegenhaltungen:
- EP-A1- 2 088 232
- DE-A1- 10 252 011
- GB-A- 2 216 963

## Beschreibung

Die Erfindung betrifft ein Waschaggregat für eine Waschmaschine, das einen aus Kunststoff gefertigten Laugenbehälter mit einem durch Kunststoffumspritzen in dessen Boden gehaltenen metallischen Lagergehäuse zur Aufnahme von mindestens einem ersten und einem zweiten Lager zur fliegenden Lagerung eines am Boden einer im Laugenbehälter drehbar angeordneten Waschtrommel befestigten Wellenzapfens umfasst sowie einen trommelseitig vor dem ersten Lager angeordneten Wellendichtring mit am Innenumfang ausgebildeten dynamischen Dichtungslippen und einem am Außenumfang vorgesehenen, an einem Dichtringsitz positionierten statischen Dichtflansch aufweist.

Die DE 102 52 011 A1 beschreibt eine Waschmaschine mit einem im Wesentlichen zylindrischen Laugenbehälter und mit einer darin drehbar gelagerten ebenfalls zylindrischen Trommel, wobei zur drehbaren Lagerung der Trommel an deren Boden ein Wellenzapfen angeordnet ist, welcher sich durch eine Öffnung im Laugenbehälterboden erstreckt und von mindestens zwei Lagern aufgenommen wird, welche innerhalb eines Lagergehäuses angeordnet sind, und wobei zur Abdichtung der Öffnung eine Dichtungsanordnung vorgesehen ist, die mit einem ersten Dichtungsteil an dem Wellenzapfen bzw. einem auf dem Wellenzapfen angeordneten Laufring und mit einem zweiten Dichtungsteil am Laugenbehälterboden anliegt. Um wenigstens die Stirnseite des Lagergehäuses vor Korrosion zu schützen, wird ein drittes Dichtungsteil vorgeschlagen, welches auf der dem Laugenbehälterboden gegenüberliegenden Seite wenigstens an der Stirnfläche des Lagergehäuses anliegt.

Ein Waschaggregat der eingangs erwähnten Art ist beispielsweise auch aus der DE 103 50 794 A1 oder der EP 2 088 232 A1 bekannt. Bei diesem Waschaggregat ist das aus Metall bestehende Lagergehäuse derart an dem im Wesentlichen hohlzylindrischen, aus Kunststoff bestehenden Laugenbehälters gehalten, dass das Lagergehäuse wenigstens teilweise mit dem Kunststoff des Laugenbehälterbodens umspritzt ist. Um das Eindringen von Schmutz und insbesondere Lauge in die Lager und das Austreten von Schmierstoff in den Laugenbehälter zu verhindern, ist vor dem der Waschtrommel gegenüberliegenden ersten Lager ein Wellendichtring angeordnet. Am Innenumfang des Wellendichtrings vorgesehene innere Dichtlippen kontaktieren einen mit dem Wellenzapfen der Waschtrommel fest verbundenen Laufring, während ein von einem Versteifungsring abgestützter äußerer Dichtflansch des Wellendichtrings am Innenumfang der im Laugenbehälterboden gebildeten Öffnung zur Aufnahme des Lagergehäuses, das heißt dem an der Kunststoffnabe des Laugenbehälters vorgesehenen Sitz des Wellendichtrings anliegt.

Fertigungsbedingt tritt aufgrund der großen Abmessungen des Laugenbehälters sowie des Werkzeugversatzes und des Schwindens des Kunststoffs eine erhebliche Koaxialitätsabweichung zwischen der Waschtrommelachse, das heißt dem Wellenzapfen der Waschtrommel, und dem Sitz des Wellendichtrings an der Kunststoffnabe des Laugenbehälters auf. Die Koaxialitätsabweichung zwischen dem Wellendichtringsitz am Kunststofflaugenbehälter und der Trommelachse verringert zum einen die Dichtwirkung. Darüber hinaus wird das Reibmoment an den Dichtlippen und damit deren Temperatur erhöht, so dass nur eine eingeschränkte Lebensdauer erreicht werden kann. Aufgrund des unrunden, glatten und mit Entformungsschrägen versehenen Radialwellendichtringsitzes an der Kunststoffnabe des Laugenbehälters wird zudem das Herauswandern des Radialwellendichtrings begünstigt, das ebenfalls zu einer Verminderung der Dichtwirkung und damit der Lebensdauer des Lagers führt.

Der Erfindung liegt die Aufgabe zugrunde, ein Waschaggregat für eine Waschmaschine, das einen aus Kunststoff bestehenden Laugenbehälter mit einer in dessen Kunststoffnabe gehaltenen Lagerung für eine Waschtrommel und ein der Lagerung zugeordnetes Dichtungssystem umfasst, so auszubilden, dass eine hohe und gleichbleibende Dichtwirkung und eine lange Lebensdauer des Dichtungssystems gewährleistet sind.

Erfindungsgemäß wird die Aufgabe mit einem gemäß den Merkmalen des Patentanspruchs 1 ausgebildeten Waschaggregat gelöst. Vorteilhafte Weiterbildungen und zweckmäßige Ausgestaltungen der Erfindung sind Gegenstand der Unteransprüche.

Bei einem gemäß dem Oberbegriff des Anspruchs 1 ausgebildeten Waschaggregat besteht der Kern der Erfindung darin, dass der Dichtringsitz durch einen metallischen Dichtungssitz am Lagergehäuse und einen durch eine Stufe im Lagergehäuse radial versetzt angeordneten Kunststoffdichtungssitz an dem das Lagergehäuse einfassenden Boden des Laugenbehälters gebildet ist, wobei der Dichtflansch eine am Kunststoffdichtungssitz statisch abdichtende, dickwandige, elastische Ringmanschette aufweist.

Das so gestaltete Dichtungssystem gewährleistet aufgrund der genau herstellbaren zylindrischen Form des metallischen Dichtungssitzes eine optimale koaxiale Ausrichtung des Wellendichtrings zur Waschtrommelachse und damit eine gleichbleibend hohe dynamische Abdichtung am Wellenzapfen der Waschtrommel sowie eine lange Lebensdauer des Wellendichtrings. Der spanend zylindrisch und mit einer bestimmten Oberflächenrauheit gefertigte metallische Dichtungssitz verhindert zudem ein Herauswandern der Dichtung und eine auch dadurch bedingte Verringerung der Dichtwirkung und der Lebensdauer. Andererseits gewährleistet die durch die Abstufung am Lagergehäuseradial versetzte Anordnung des Kunststoffdichtungssitzes in der Kombination mit der dickwandigen, elastischen Manschette eine sichere statische Abdichtung am Laugenbehälter.

Gemäß einem weiteren Merkmal der Erfindung sind in die am metallischen Dichtungssitz anliegende Oberfläche des Dichtflansches Entlüftungsschlitze eingeformt, um eine Luftverdichtung bei der Montage des Wellendichtrings und ein dadurch bedingtes Herauswandern des Wellendichtrings und eine Verringerung der Dichtwirkung zu vermeiden. Eine vom freien Ende des Dichtflansches abgewinkelte Stirnseite bildet eine Dichtfläche am Lagergehäuse, so dass auch hier trotz der Entlüftungsschlitze eine statische Abdichtung am Lagergehäuse gewährleistet ist.

In vorteilhafter Weiterbildung der Erfindung ist an der zur Waschtrommel weisenden Außenkante der Ringmanschette eine Abschirmlippe zur Verbesserung der statischen Abdichtung am Kunststoffdichtungssitz vorgesehen. Darüber hinaus sind an der Ringmanschette zum Kunststoffdichtungssitz weisende Dichtungslippen angeformt.

In Ausgestaltung der Erfindung ist der Dichtflansch mit Ringmanschette über die gesamte Breite des Kunststoffdichtungssitzes und des metallischen Dichtungssitzes durch einen Versteifungsring abgestützt.

In weiterer Ausgestaltung der Erfindung kann die dickwandige, elastische Ringmanschette auch als O-Ring ausgebildet sein.

Ein Ausführungsbeispiel der Erfindung wird anhand der Zeichnung näher erläutert. Es zeigen:
- Fig. 1: eine Seitenansicht einer Waschmaschine im Schnitt;
- Fig. 2: eine Schnittansicht der Lagerung des Wellenzapfens der Waschtrommel und der Lagerabdichtung im Boden des Lagenbehälters;
- Fig. 3: eine vergrößerte Darstellung der Lagerabdichtung gemäß Fig. 2; und
- Fig. 4: eine perspektivische Darstellung des Wellendichtrings für die Lagerabdichtung.

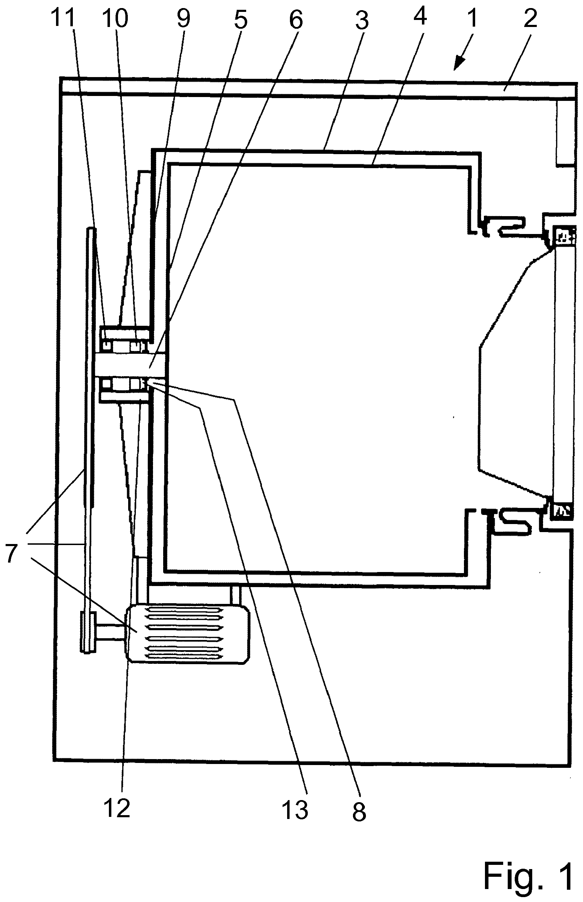

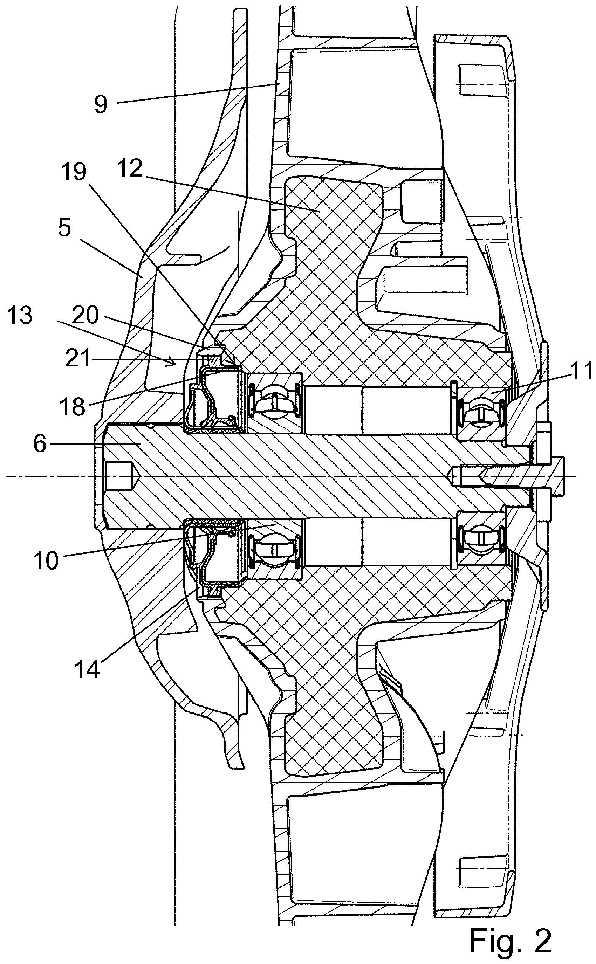

Die in Fig. 1 schematisch dargestellte Waschmaschine 1 umfasst ein in einem Gehäuse 2 angeordnetes, aus einem Laugenbehälter 3 und einer Waschtrommel 4 bestehendes Waschaggregat. Die im Laugenbehälter 3 drehbar angeordnete Waschtrommel 4 wird an einem am Boden 5 der Waschtrommel 4 befestigten Wellenzapfen 6 mit einer Antriebsvorrichtung 7 angetrieben. Der Wellenzapfen 6 ist in einem in einer mittigen Öffnung 8 oder Nabe des Bodens 9 des aus Kunststoff bestehenden Laugenbehälters 3 gehaltenen, ein erstes und ein zweites Lager 10, 11 aufnehmenden Lagergehäuse 12 gelagert. Dem ersten Lager 10 ist auf der Seite der Waschtrommel 4 ein anhand der Figuren 2 bis 4 näher erläutertes Dichtungssystem 13 zugeordnet, um zu verhindern, dass Schmutz und Lauge zu den Lagern 10, 11 gelangen und dass Schmiermittel in den Laugenbehälter 3 eintreten kann..

Wie Fig. 2 zeigt, ist der Boden 9 des Laugenbehälters 3 so ausgebildet, dass das aus Metall bestehende Lagergehäuse 12 teilweise mit Kunststoff umspritzt und dadurch in der mittigen Öffnung 8 des Laugenbehälters 3 gehalten ist. Das Dichtungssystem 13 umfasst einen Wellendichtring 14 mit inneren Dichtlippen 15, die einen auf den Wellenzapfen 6 aufgepressten Laufring 16 kontaktieren und so eine dynamische Abdichtung am Wellenzapfen 6 gewährleisten. An der Außenumfangsseite des Wellendichtrings 14 sorgt ein von einem Versteifungsring 17 gestützter Dichtflansch 18, der sowohl an einem metallischen Dichtungssitz 19 des Lagergehäuses 12 als auch an einem - zum metallischen Dichtungssitz 19 radial versetzt angeordneten - Kunststoffdichtungssitz 20 des an das Lagergehäuse 12 gespritzten Bodens 9 des Laugenbehälters 3 anliegt, für die erforderliche statische Abdichtung zwischen dem Laugenbehälter 3 und dem Lagergehäuse 12. Aufgrund der Positionierung des Wellendichtrings 14 an dem exakt zylindrisch und auch in einer bestimmten Oberflächenrauheit gefertigten metallischen Dichtungssitz 19 ist eine sehr genaue koaxiale Ausrichtung des Wellendichtrings 14 zum Wellenzapfen 6 der Waschtrommel gewährleistet. Zudem verhindert die Positionierung des Wellendichtrings an dem metallischen Dichtungssitz 19 ein Herauswandern des Wellendichtrings 14 entgegen.

Der Dichtflansch 18 ist in dem Anlagebereich an dem zum metallischen Dichtungssitz 19 durch eine Abstufung am Lagergehäuse radial versetzt angeordneten Kunststoffdichtungssitz 20 durch eine Ringmanschette 21 mit an deren Außenumfang ausgebildeten Dichtungslippen 22 erweitert. Die als statische Dichtung an der Öffnung des Laugenbehälters 3 fungierende dickwandige, elastische Ringmanschette 21 kann die Unrundheiten und Unebenheiten im Bereich der Kunststoffdichtungssitzes 20 im Boden 9 des Laugenbehälters 3 gut ausgleichen, so dass eine sichere statische Abdichtung gewährleistet ist. Zudem sorgt eine an der vorderen Kante der Ringmanschette 21 angeformte Abschirmlippe 23 für eine zusätzliche Abdichtung.

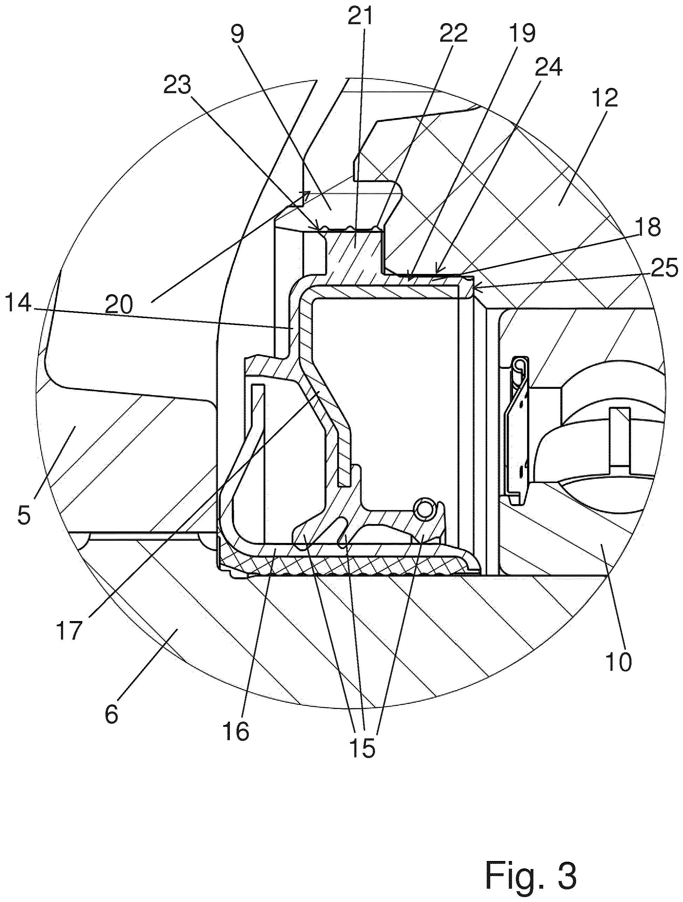

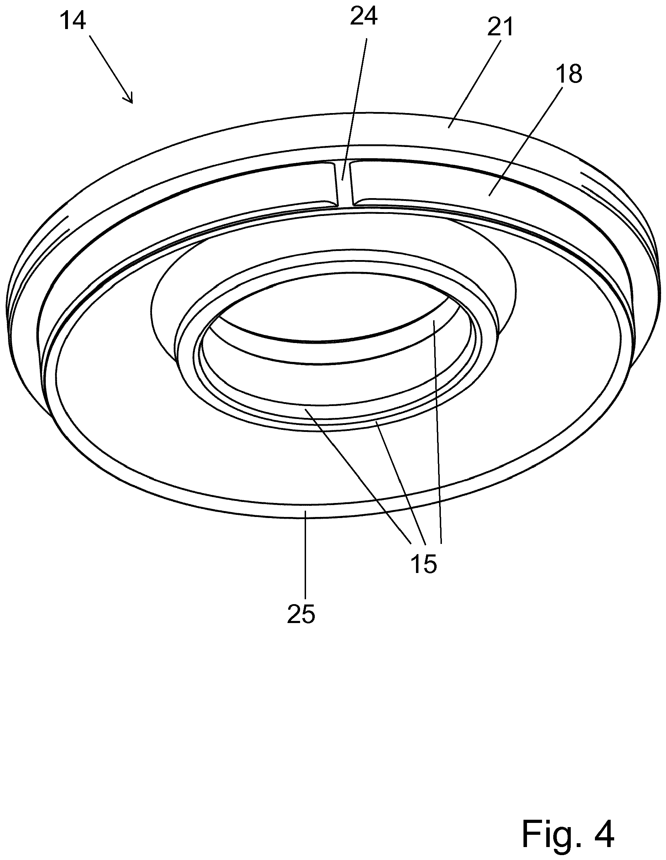

Insbesondere aus den Figuren 3 und 4 ist ersichtlich, dass in den an dem metallischen Dichtungssitz 19 anliegenden Teil des Dichtflansches 18 der Wellenringdichtung 14 Entlüftungsschlitze 24 eingeformt sind, so dass bei der Montage der Wellenringdichtung 14 zwischen der Ringmanschette 21 und dem Lagergehäuse 12 verdichtete Luft über die Entlüftungsschlitze 24 entweichen kann und dadurch ein durch die Luftverdichtung bedingtes Herauswandern der Wellenringdichtung verhindert wird. Die statische Abdichtung zum Lagergehäuse 12 erfolgt mit der Stirnseite 25 des Dichtflansches 18.

### Bezugszeichenliste

- 1: Waschmaschine
- 2: Gehäuse
- 3: Laugenbehälter
- 4: Waschtrommel
- 5: Boden von 4
- 6: Wellenzapfen von 4
- 7: Antriebsvorrichtung
- 8: Öffnung in 9
- 9: Boden von 3
- 10: erstes Lager
- 11: zweites Lager
- 12: Lagergehäuse
- 13: Dichtungssystem
- 14: Wellendichtring
- 15: innere Dichtlippen
- 16: Laufring
- 17: Versteifungsring
- 18: Dichtflansch
- 19: metallischer Dichtungssitz an 12
- 20: Kunststoffdichtungssitz an 9
- 21: Ringmanschette von 18
- 22: Dichtungslippen von 21
- 23: Abschirmlippe von 21
- 24: Entlüftungsschlitze von 18
- 25: Stirnseite von 18

## Patentansprüche

1. Waschaggregat für eine Waschmaschine, das einen aus Kunststoff gefertigten Laugenbehälter (3) mit einem durch Kunststoffumspritzen in dessen Boden (9) gehaltenen metallischen Lagergehäuse (12) zur Aufnahme von mindestens einem ersten und einem zweiten Lager (10, 11) zur fliegenden Lagerung eines am Boden (5) einer im Laugenbehälter (3) drehbar angeordneten Waschtrommel (4) befestigten Wellenzapfens (6) umfasst sowie einen trommelseitig vor dem ersten Lager (10) angeordneten Wellendichtring (14) mit am Innenumfang ausgebildeten dynamischen Dichtungslippen (15) und einem am Außenumfang vorgesehenen, an einem Dichtringsitz positionierten statischen Dichtflansch (18) aufweist, **dadurch gekennzeichnet, dass** der Dichtringsitz durch einen metallischen Dichtungssitz (19) am Lagergehäuse (12) und einen durch eine Stufe im Lagergehäuse (12) radial versetzt angeordneten Kunststoffdichtungssitz (20) an dem das Lagergehäuse einfassenden Boden des Laugenbehälters (3) gebildet ist, wobei der Dichtflansch (18) eine am Kunststoffdichtungssitz (20) statisch abdichtende, dickwandige, elastische Ringmanschette (21) aufweist,
**dadurch gekennzeichnet,**
**dass** in die am metallischen Dichtungssitz (19) anliegende Oberfläche des Dichtflansches (18) Entlüftungsschlitze (24) eingeformt sind und eine vom freien Ende des Dichtflansches (18) abgewinkelte Stirnseite (25) eine Dichtfläche am Lagergehäuse (12) bildet.

2. Waschaggregat nach Anspruch 1, **dadurch gekennzeichnet, dass** der metallische Dichtungssitz (19) am Lagergehäuse (12) zur Erzeugung einer genauen Zylinderform und einer bestimmten Oberflächenrauheit spanend bearbeitet ist.

3. Waschaggregat nach Anspruch 1, **dadurch gekennzeichnet, dass** an der zur Waschtrommel weisenden Außenkante der Ringmanschette (21) eine Abschirmlippe (23) vorgesehen ist.

4. Waschaggregat nach Anspruch 1, **dadurch gekennzeichnet, dass** an der Ringmanschette (21) zum Kunststoffdichtungssitz (20) weisende Dichtungslippen (21) angeformt sind.

5. Waschaggregat nach einem der Ansprüche 1 bis 4, **dadurch gekennzeichnet, dass** der Dichtflansch (18) mit Ringmanschette (21) über die gesamte Breite des Kunststoffdichtungssitzes (20) und des metallischen Dichtungssitzes (19) durch einen Versteifungsring (17) abgestützt ist.

6. Waschaggregat nach Anspruch 1, **dadurch gekennzeichnet, dass** die dickwandige, elastische Ringmanschette als O-Ring ausgebildet ist.

## Claims

1. Washing unit for a washing machine, comprising a suds container (3) which is made of a plastics material and has a metal bearing housing (12) which is held at the base (9) thereof by means of coating with plastics material and is intended for receiving at least one first and one second bearing (10, 11) for mounting in a suspended manner a shaft journal (6) that is attached to the base (5) of a washing drum (4) rotatably arranged in the suds container (3), and comprising a shaft sealing ring (14) that is arranged in front of the first bearing (10) on the drum side and has dynamic sealing lips (15) that are formed on the inner circumference, and a static sealing flange (18) that is provided on the outer circumference and positioned on a sealing ring seat, **characterised in that** the sealing ring seat is formed by a metal sealing seat (19) on the bearing housing (12) and by a plastics sealing seat (20), arranged in a manner radially offset in the bearing housing (12) by a gradation, at the base of the suds container (3), which borders the bearing housing, the sealing flange (18) comprising a thick-walled resilient annular collar (21) that statically seals against the plastics sealing seat (20),
**characterised in that**
venting slots (24) are moulded into the surface of the sealing flange (18) that abuts the metal sealing seat (19) and an end face (25) that is angled away from the free end of the sealing flange (18) forms a sealing surface on the bearing housing (12).

2. Washing unit according to claim 1, **characterised in that** the metal sealing seat (19) on the bearing housing (12) is machined so as to produce a precise cylindrical shape and a certain surface roughness.

3. Washing unit according to claim 1, **characterised in that** a shielding lip (23) is provided on the outer edge of the annular collar (21) that faces the washing drum.

4. Washing unit according to claim 1, **characterised in that** sealing lips (21), which face the plastics sealing seat (20), are integrally formed on the annular collar (21).

5. Washing unit according to any of claims 1 to 4, **characterised in that** the sealing flange (18), together with the annular collar (21), is supported by a reinforcement ring (17) over the entire width of the plastics sealing seat (20) and of the metal sealing seat (19).

6. Washing unit according to claim 1, **characterised in that** the thick-walled resilient annular collar is designed as an O ring.

## Revendications

1. Ensemble de lavage pour une machine à laver, lequel comprend une cuve à lessive (3) fabriquée en matière plastique avec un carter de palier (12) métallique, maintenu en son plancher (9) par l'intermédiaire d'injections de matière plastique, lequel carter de roulement est destiné à la réception d'au moins un premier et un deuxième paliers (10, 11) destinés au montage sur un palier volant d'un tourillon d'arbre (6) fixé au plancher (5) d'un tambour de lavage (4) disposé de manière rotative dans la cuve à lessive (3), et présente également une bague à lèvres pour l'arbre (14), disposée du côté du tambour et installée en amont du premier palier (10), laquelle est pourvue de lèvres d'étanchéité (15) dynamiques, conçues au niveau de la circonférence intérieure, et d'une bride d'étanchéité (18) statique, prévue au niveau de la circonférence extérieure et positionnée au niveau du siège de la bague à lèvres, **caractérisé en ce que** le siège de la bague à lèvres est formé, au niveau du plancher de la cuve à lessive (3) entourant le carter de palier, par un siège de joint (19) métallique, situé au niveau du carter de palier (12), et par un siège du joint en matière plastique (20), disposé en décalage de manière radiale par l'intermédiaire d'un étage dans le carter de palier (12), dans lequel la bride d'étanchéité (18) présente une manchette circulaire (21) élastique, aux parois épaisses et apportant une étanchéité de manière statique, au niveau du siège du joint en matière plastique (20),
**caractérisé en ce que**
des fentes d'évacuation de l'air (24) sont moulées dans la surface de la bride d'étanchéité (18), laquelle surface vient s'appliquer contre le siège de joint (19) métallique, et **en ce qu'**une face frontale (25), laquelle forme un angle à partir de l'extrémité libre de la bride d'étanchéité (18), forme une surface d'étanchéité au niveau du carter de palier (12).

2. Ensemble de lavage selon la revendication 1, **caractérisé en ce que** le siège de joint (19) métallique est usiné au niveau du carter de palier (12), en vue de la création d'une forme cylindrique exacte et d'une certaine rugosité de la surface.

3. Ensemble de lavage selon la revendication 1, **caractérisé en ce que** une lèvre formant écran (23) est prévue au niveau de la bordure externe, qui fait face au tambour de lavage, de la manchette circulaire (21).

4. Ensemble de lavage selon la revendication 1, **caractérisé en ce que** des lèvres d'étanchéité (21), faisant face au siège du joint en matière plastique (20), sont moulées au niveau de la manchette circulaire (21).

5. Ensemble de lavage selon l'une des revendications 1 à 4, **caractérisé en ce que** la bride d'étanchéité (18), avec la manchette circulaire (21), est soutenue par l'intermédiaire d'une bague de renforcement (17) et ce sur toute la largeur du siège du joint en matière plastique (20) et du siège de joint (19) métallique.

6. Ensemble de lavage selon la revendication 1, **caractérisé en ce que** la manchette circulaire élastique, aux parois épaisses, se présente sous la forme d'une bague torique d'étanchéité.
